# EUROPEAN PATENT APPLICATION

(11) **EP 4 215 680 A1**
(43) Date of publication of application: **26.07.2023**
(21) Application number: 23150278.2
(22) Date of filing: 04.01.2023
(51) Int. Cl.: E03C 1/06, F16B 2/02

(54) **SLIDING ADJUSTMENT DEVICE AND ADJUSTMENT METHOD THEREFOR**

(30) Priority: 25.01.2022 CN 202210085608
(71) Applicant: Fujian Xihe Sanitary Ware Technology Co., Ltd., QuanZhou, Fujian (CN)
(72) Inventor: LIN, Xiaofa, QuanZhou, Fujian, China (CN); LIN, Xiaoshan, QuanZhou, Fujian, China (CN); WANG, Mingnan, QuanZhou, Fujian, China (CN); LIANG, Pansheng, QuanZhou, Fujian, China (CN); DENG, Xiaoqing, QuanZhou, Fujian, China (CN); LIU, Qiqiao, QuanZhou, Fujian, China (CN)
(74) Representative: Schröer, Gernot H.

(57) **Abstract**

A sliding adjustment device and an adjustment method therefor are disclosed in the present application. The sliding adjustment device includes a movable seat and an adjustment mechanism, the movable seat is provided with a sleeve hole through which a rod may pass; the adjustment mechanism includes a lock member and a drive member, the lock member is movably disposed at the movable seat and has a first state and a second state, the lock member enters the sleeve hole and abuts against the rod to lock the movable seat in the first state, and the lock member releases the rod to unlock the movable seat in the second state; the drive member is movably disposed at the movable seat, and is fitted with the lock member through a transmission structure, and the drive member drives the lock member to move to the second state by moving along an axial first direction of the rod or an axial second direction of the rod opposite to the first direction; the lock member and/or the drive member are fitted with the movable seat through a reset member to make the lock member return to the first state. According to the present application, an operation unlocking direction of the drive member can be consistent with the adjustment direction of the movable seat in the axial direction of the rod, so that the movable seat may be adjusted to a suitable position only by a one-step operation, which is convenient for use.

## Description

### Technical Field

The present application relates to the field of sanitary ware, in particular to a sliding adjustment device and an adjustment method therefor.

### Background

A lifting rod of a shower equipment is usually provided with a sliding adjustment device, such as a shower slide seat, a shelf, a soap box, and the like, and such sliding adjustment device may usually slide up and down along the lifting rod to be adjusted to a suitable height. Therefore, such sliding adjustment device generally includes a movable seat which may be sleeved outside the lifting rod and an adjustment mechanism for adjusting the height. The adjustment mechanism generally includes a lock member for locking the movable seat, a reset member and a drive member. The drive member generally moves in a single direction to link the lock member to achieve unlocking. For example, the lock member may be unlocked by pressing the drive member, or the lock member may be unlocked by rotating the drive member. When the drive member is released by hand, the lock member returns to the state of locking the movable seat by the reset member. Since an operation direction of the drive member is difficult to be consistent with the adjustment direction of the movable seat, when a user needs to adjust the height of the sliding adjustment device, at least two steps of operation are required: firstly, the drive member is operated to perform unlock, and then the movable seat is moved to a suitable height under the unlocked state. Such manner, which requires multi-step operation and adjustment, brings poor experience to users and is inconvenient for some special groups, such as the elderly, children and the disabled.

### Summary

The present application aims at the technical problems existing in the prior art, and provides a sliding adjustment device and an adjustment method thereof, which enable the operation unlocking direction of a drive member to be consistent with the adjustment direction of a movable seat in the axial direction of a rod, and realize a simple mode of one-step adjustment in place.

A technical scheme adopted by the present application to solve the technical problems is as follows. A sliding adjustment device is provided, which includes a movable seat and an adjustment mechanism, wherein the movable seat is provided with a sleeve hole through which a rod may pass; the adjustment mechanism includes a lock member and a drive member, the lock member is movably disposed at the movable seat and has a first state and a second state, the lock member enters the sleeve hole and abuts against the rod to lock the movable seat in the first state, and the lock member releases the rod to unlock the movable seat in the second state; the drive member is movably disposed at the movable seat, and is fitted with the lock member through a transmission structure, and the drive member drives the lock member to move to the second state by moving along an axial first direction of the rod or an axial second direction of the rod opposite to the first direction; the lock member and/or the drive member are fitted with the movable seat through a reset member to make the lock member return to the first state.

Further, the transmission structure includes a first transmission surface and a second transmission surface which are on the drive member and distributed along a movement direction of the drive member. When the drive member moves along the first direction, the drive member pushes the lock member by the first transmission surface of the drive member, and when the drive member moves along the second direction, the drive member pushes the lock member by the second transmission surface of the drive member.

Further, the drive member is fitted with the lock member through at least one mesh assembly, the mesh assembly includes at least one mesh groove and at least one mesh tooth, two mesh surfaces of the mesh groove are in a splayed shape, with the mesh groove being wider at outer side and narrower at inner side, and the mesh tooth is fitted and meshed with the mesh groove; the mesh groove is disposed in the drive member, the mesh tooth is disposed in the lock member, and two mesh surfaces of the mesh groove respectively constitute the first transmission surface and the second transmission surface, or the mesh tooth is disposed in the drive member, the mesh groove is disposed in the lock member, and two mesh surfaces of the mesh tooth respectively constitute the first transmission surface and the second transmission surface.

Further, the lock member is rotationally connected with the movable seat, and a rotation axis of the lock member is perpendicular to the movement direction of the drive member.

Further, the reset member is an elastic member, and two ends of the reset member are respectively abutted against the lock member and the movable seat; an arm of force corresponding to an elastic force exerted by the reset member on the lock member is larger than an arm of force corresponding to an abutment force exerted by the lock member on the rod and smaller than an arm of force corresponding to a driving force exerted by the drive member on the lock member.

Further, the movable seat is provided with an accommodation cavity leading to the sleeve hole; the lock member, the reset member and the transmission structure are respectively located in the accommodation cavity; one end of the movable seat in the movement direction of the movable seat is provided with an opening leading to the accommodation cavity; the lock member, the reset member and the transmission structure enter the accommodation cavity from the opening, and a cover plate is connected at the opening, and the cover plate restricts the drive member from separating from the movable seat.

Further, a pressing rubber block is disposed on a face of the lock member toward the rod, so that the pressing rubber block abuts against the rod in the first state; the reset member is an elastic member, and two ends of the reset member are respectively abutted against the lock member and the movable seat.

Further, the drive member is fitted with the movable seat through a guide and limit structure; the guide and limit structure includes a guide post disposed at one end of the drive member along the movement direction of the drive member and a guide and limit groove disposed at an inner side surface of the sleeve hole of the movable seat along the movement direction of the drive member, one end of the guide and limit groove in a length direction is open and the other end of the guide and limit groove is closed, and the guide post is slidably connected with the guide and limit groove; a bushing is mounted in the sleeve hole of the movable seat, and the bushing is provided with multiple avoidance notches for avoiding the drive member and the lock member.

Further, the drive member has a tubular structure which may be sleeved outside the rod, and/or the drive member is provided with an operating handle.

Further, a shower pedestal is disposed on the movable seat, and the shower pedestal is provided with an insert slot for inserting a shower therein; the shower pedestal may be rotated to adjust a working angle and is connected to the movable seat, and the movable seat is fixedly provided with a shift gear, which is meshed with an inner gear ring disposed around a rotation axis of the shower pedestal.

The present application further provides a method for adjusting a shower slide seat, wherein a movable seat of the sliding adjustment device is sleeved on a rod, and a lock member is used to abut against the rod to lock the movable seat; during adjustment, a drive member is moved along an axial first direction of the rod or an axial second direction of the rod opposite to the first direction, so that the drive member is linked with the lock member to move and to release the rod, and the drive member is continuously moved along the first direction or the second direction, so that the movable seat is moved to a designated position of the rod; when the adjustment is completed, the lock member and/or the drive member are reset by the reset member, and the lock member returns to a state of locking the movable seat.

Compared with the prior art, the present application has the following beneficial effects:
1. Since the drive member is movably disposed at the movable seat, and is fitted with the lock member through the transmission structure, and the drive member drives the lock member to move to the second state by moving along the axial first direction of the rod or the axial second direction of the rod opposite to the first direction, so that the operation unlocking direction of the drive member can be consistent with the adjustment direction of the movable seat in the axial direction of the rod, when performing adjustment, the movable seat can be adjusted to a suitable position only by one-step operation, which is convenient, thereby improving the user experience, and the present application is especially convenient for some special groups, such as the elderly, children, the disabled and the like.
2. The transmission structure includes the first transmission surface and the second transmission surface, so that the drive member can achieve a function of bidirectional movable unlocking with a simple structure, and the structure facilitates processing, production and assembling, and the structure is compact, so that the sliding adjustment device can be kept at a miniaturized volume. In particular, the drive member is fitted with the lock member through the mesh assembly, and two mesh surfaces of the mesh groove or the mesh tooth constitute the first transmission surface and the second transmission surface, so that the fitting between the drive member and the lock member is more stable and the action is more reliable.
3. The lock member is rotationally connected with the movable seat, and a rotation axis of the lock member is perpendicular to the movement direction of the drive member, so that the lock member is similar to a rotating hinge, which facilitates the transmission and fit with the drive member. In particular, the arm of force corresponding to the elastic force exerted by the reset member on the lock member is larger than the arm of force corresponding to the abutment force exerted by the lock member on the rod, and is smaller than the arm of force corresponding to the driving force exerted by the drive member on the lock member, so that a reset member with smaller elastic force can generate a relatively large abutment force, so as to keep the movable seat at an adjusted position, and the user can overcome the elastic force of the reset member only by a relatively small pushing or pulling force, thus achieving an effect of saving operation labor.
4. The movable seat is provided with the accommodation cavity, and the lock member, the reset member and the like are hidden in the accommodation cavity, so that the overall appearance is more concise. In particular, the accommodation cavity is provided with the opening and is covered by a cover plate, which can not only facilitate installation, but also can limit the drive member.
5. The drive member is slidably connected to the movable seat, which can improve the good guidance for the movement of the drive member.
6. The drive member is a tubular structure that may be sleeved outside the rod, which may not only provide guidance for the movement of the drive member by the rod, but also avoid the possibility that the drive member is arbitrarily detached and lost.
7. The shower pedestal is rotationally connected to the movable seat, so that the working angle of the shower pedestal can be adjusted. In particular, the arrangement of the shift gear and the inner gear ring not only can keep the shower pedestal at the adjusted angle, but also can generate a shift hand feeling when the user adjusts the working angle of the shower pedestal.

The present application is further described in detail below with reference to the accompanying drawings and embodiments. However, the sliding adjustment device and the adjustment method therefor according to the present application are not limited to the embodiments.

### Brief Description of Drawings

FIG. 1 is an exploded schematic diagram of the present application.
FIG. 2 is a schematic diagram of a three-dimensional structure of a drive member of the present application.
FIG. 3 is a schematic diagram of a three-dimensional structure of a lock member of the present application (excluding a pressing rubber block).
FIG. 4 is a schematic diagram of the fit between the lock member and a movable seat (including the shower pedestal) of the present application.
FIG. 5 is a schematic diagram of a three-dimensional structure of an inner bushing of the present application.
FIG. 6 is a schematic diagram of a three-dimensional structure of a movable seat of the present application.
FIG. 7 is a schematic diagram of a three-dimensional structure of a shower pedestal of the present application.
FIG. 8 is a schematic diagram of a three-dimensional structure of the present application.
FIG. 9 is a bottom view of the present application.
FIG. 10 is a schematic diagram of a three-dimensional structure of the present application assembled with a rod.
FIG. 11 is a first cross-sectional view of FIG. 10.
FIG. 12 is a second cross-sectional view of FIG. 10.
FIG. 13 is a third cross-sectional view of FIG. 10.
FIG. 14 is a schematic diagram of a three-dimensional structure of FIG. 10 excluding the movable seat and the shower pedestal.
FIG. 15 is a schematic diagram of push-up of the present application.
FIG. 16 is a schematic diagram of a structure of the present application when the drive member is pushed up until the lock member is in a second state.
FIG. 17 is a cross-sectional view of the present application when the drive member is pushed up until the lock member is in the second state.
FIG. 18 is a schematic diagram of pull-down of the present application.
FIG. 19 is a schematic diagram of a structure of the present application when the drive member is pulled down until the lock member is in the second state.
FIG. 20 is a cross-sectional view of the present application when the drive member is pulled down until the lock member is in the second state.
FIG. 21 is a schematic diagram of a force analysis of the present application.
FIG. 22 is a schematic diagram of a three-dimensional structure of another drive member of the present application.

1-movable seat, 11-sleeve hole, 12-accommodation cavity, 13-shaft hole, 14-pillar, 15-anti-rotation protrusion, 16-guide and limit groove, 2-lock member, 21-mesh tooth, 22-rotating shaft, 23-limit post, 3-drive member, 31-mesh groove, 311/312-mesh surface, 32-guide post, 33-operating handle, 4-spring, 5-pressing rubber block, 6-inner bushing, 61/62-avoidance notch for guide and limit groove, 7-shower pedestal, 71-insert slot, 72-inner gear ring, 8-shift gear, 9-cover plate, 10-screw, 20-anti-rotation cap, 30-rod.

### Detailed Description

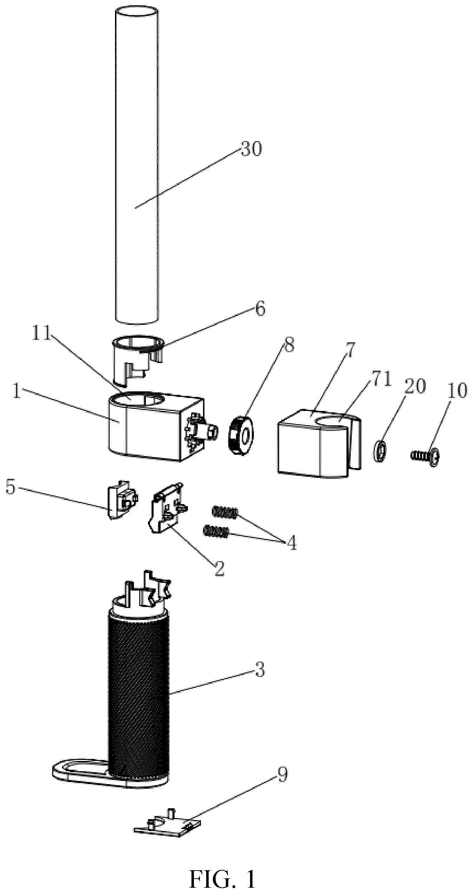

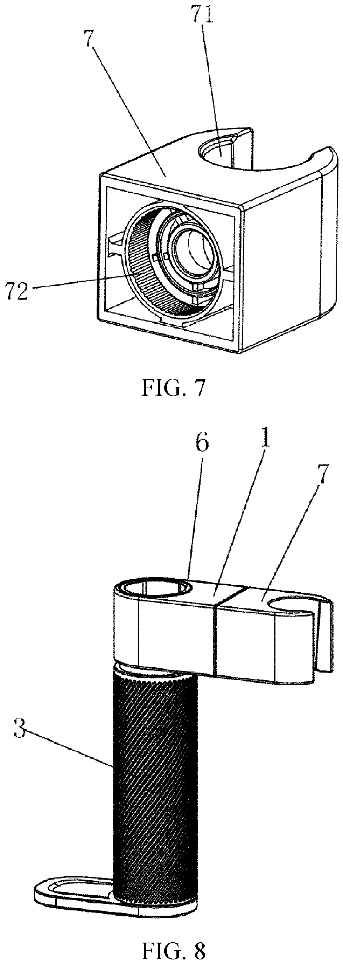

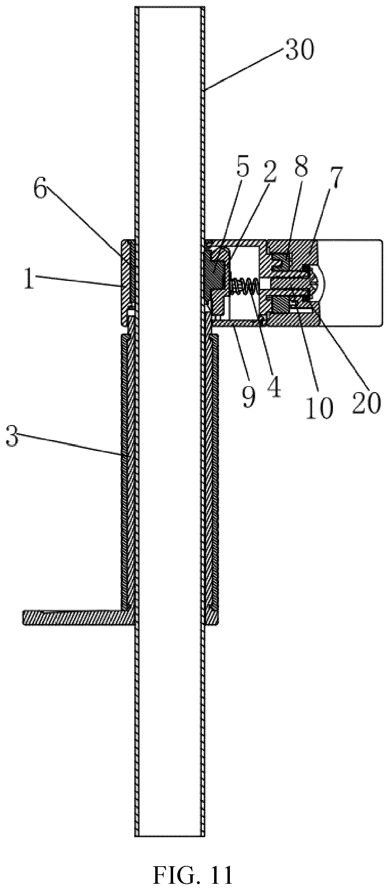

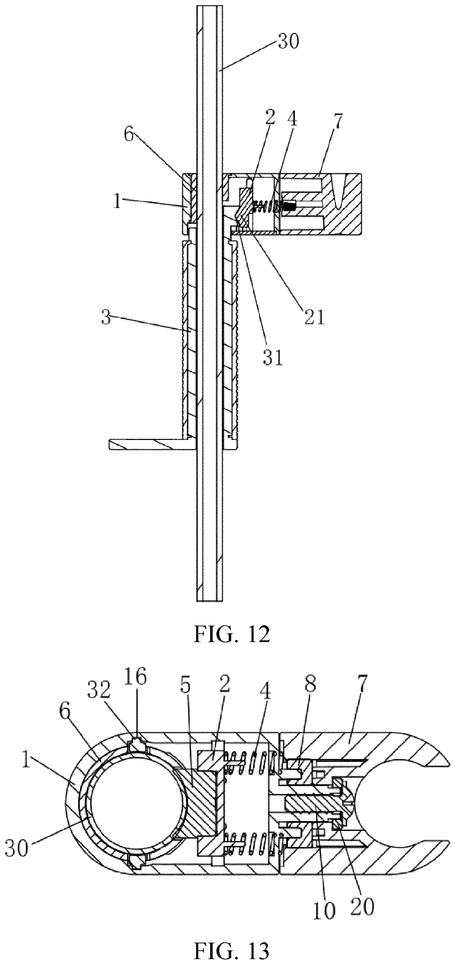

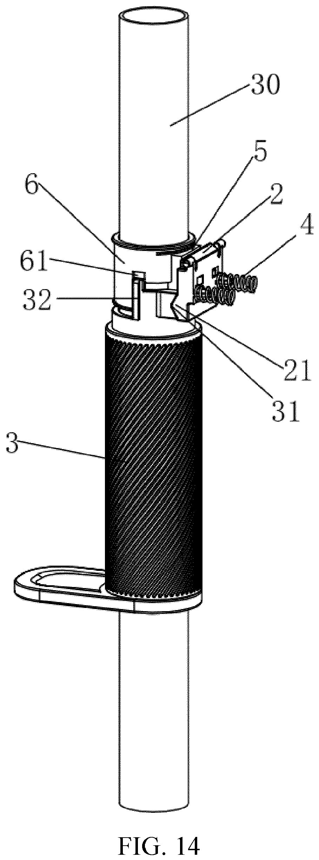

Referring to FIG. 1- FIG. 22, a sliding adjustment device of the present application includes a movable seat 1 and an adjustment mechanism for adjusting a height of the movable seat 1. The movable seat 1 is provided with a sleeve hole 11 through which a rod 30 may pass. The adjustment mechanism includes a lock member 2 and a drive member 3. The lock member 2 is movably disposed at the movable seat 1 and has a first state and a second state, the lock member 2 enters the sleeve hole 11 and abuts against the rod 30 to lock the movable seat 1 in the first state, and the lock member 2 releases the rod 30 to unlock the movable seat 1 in the second state. The drive member 3 is movably disposed at the movable seat 1, and is fitted with the lock member 2 through a transmission structure, and the drive member 3 drives the lock member 2 to move to the second state by moving along an axial first direction of the rod 30 or an axial second direction of the rod 30 opposite to the first direction. After the drive member 3 drives the lock member 2 along the first direction to unlock, continuously moving the drive member 3 along the first direction can drive the movable seat 1 to move along the first direction to achieve position adjustment, or when the drive member 3 drives the lock member 2 along the second direction to unlock, continuously moving the drive member 3 along the second direction can drive the movable seat 1 to move along the second direction to achieve position adjustment. That is, after the drive member 3 moves a certain displacement with respect to the movable seat 1 along the first direction or the second direction and drives the lock member 2 to unlock, continuously moving the drive member 3 can drive the movable seat 1 to move by the drive member 3, thereby achieving the position adjustment of the movable seat 1. Therefore, an operation unlocking direction of the drive member 3 may be consistent with the adjustment direction of the movable seat 1, and when the position of the movable seat 1 needs to be adjusted along the axial direction of the rod 30, the movable seat 1 may be adjusted to a suitable position only by a one-step operation. The lock member 2 and/or the drive member 3 are fitted with the movable seat 1 through a reset member, so that the lock member 2 returns to the first state. The rod 30 may be a hollow rod or a solid rod, and the rod 30 may be a lifting rod of a shower. Specifically, the first direction is an upward direction, and the second direction is a downward direction, which are not limited thereto. In other embodiments, when the rod is in a non-vertical direction, such as a transverse direction, the first direction may be a leftward direction, and the second direction may be a rightward direction.

In this embodiment, the transmission structure includes a first transmission surface and a second transmission surface which are distributed on the drive member 3 along a movement direction of the drive member 3, and the first transmission surface and the second transmission surface generally present a shape of Chinese word " 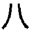 " or English letter "V". When the drive member 3 moves along the first direction, the drive member 3 pushes the lock member 2 by the first transmission surface of the drive member 3, and when the drive member 3 moves along the second direction, the drive member 3 pushes the lock member 2 by the second transmission surface of the drive member 3.

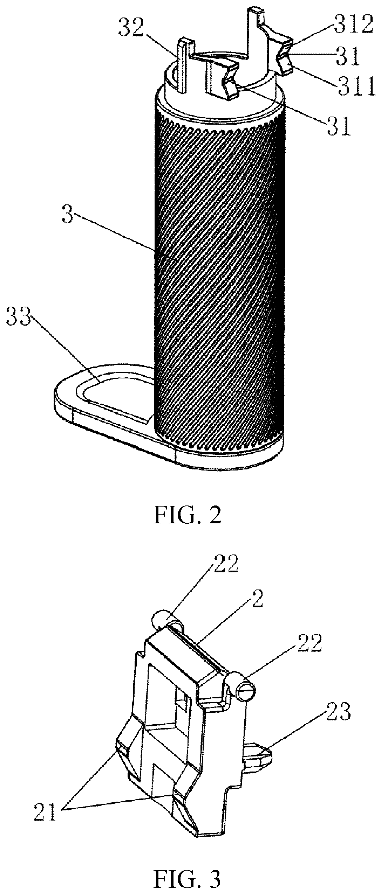

In this embodiment, the drive member 3 is fitted with the lock member 2 through at least one mesh assembly. As shown in FIG. 2 and FIG. 3, the mesh assembly includes at least one mesh groove 31 disposed on the drive member 3 and at least one mesh tooth 21 disposed on the lock member 2. The mesh tooth 21 is adapted to and meshed with the mesh groove 31, and two mesh surfaces 311 and 312 of the mesh groove 31 are in a splayed shape such that the mesh groove 31 is wider at the outer side and narrower at the inner side, and respectively constitute the first transmission surface and the second transmission surface. Specifically, the two mesh surfaces 311 and 312 approximately present a shape of Chinese word " 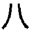 " or English letter "V". The two mesh surfaces 311 and 312 of the mesh groove 31 refer to two opposite groove surfaces of the mesh groove 31, and the mesh tooth 21 is located between the two groove surfaces when the mesh tooth 21 is in a state of being meshed with the mesh groove 31. Specifically, the quantity of the mesh assemblies is plural, and the plurality of mesh assemblies are divided into two groups and disposed at opposite lateral ends of the lock member 2, so that the lock member 2 moves smoothly and stably when the drive member 3 drives the lock member 2. In other embodiments, the mesh groove is disposed in the lock member, the mesh tooth is disposed in the drive member, and two mesh surfaces of the mesh tooth respectively constitute the first transmission surface and the second transmission surface, the two mesh surfaces of the mesh tooth refer to two tooth surfaces the mesh tooth opposite to each other, and the two mesh surfaces of the mesh tooth are generally in a shape of Chinese word " 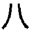 " or English letter "V".

In this embodiment, the lock member 2 is rotationally connected to the movable seat 1, and a rotation axis of the lock member 2 is perpendicular to the movement direction of the drive member 3. Specifically, an upper end of the lock member 2 is rotationally connected to the movable seat 1, and a lower end of the lock member 2 is fitted with the drive member 3 to form the transmission structure. Therefore, the drive member 3 is located below the movable seat 1 and partially enters the movable seat 1 upward to be fitted with the lock member 2.

In this embodiment, the reset member is an elastic member, specifically a spring 4, and two ends of the reset member are respectively abutted against the lock member 2 and the movable seat 1. An arm of force corresponding to an elastic force exerted by the reset member on the lock member 2 is larger than an arm of force corresponding to an abutment force exerted by the lock member 2 on the rod 30 and smaller than an arm of force corresponding to a driving force exerted by the drive member 3 on the lock member 2.

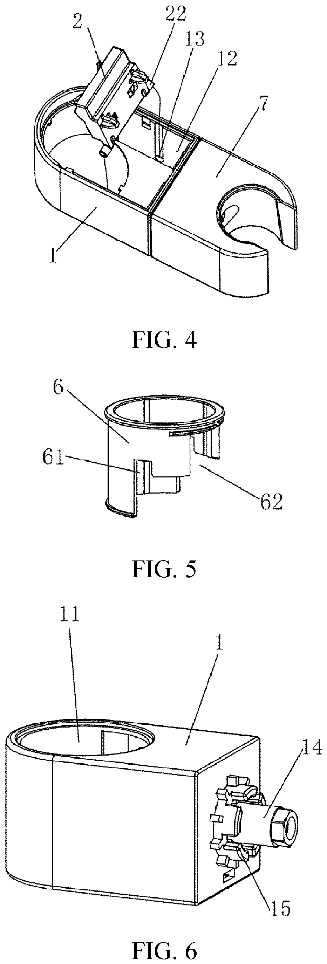

In this embodiment, the movable seat 1 is provided with an accommodation cavity 12 leading to the sleeve hole 11 of the movable seat 1. The lock member 2, the reset member and the transmission structure are respectively located in the accommodation cavity 12. One end of the movable seat 1 in the movement direction thereof is provided with an opening leading to the accommodation cavity 12. The lock member 2, the reset member (i.e., the spring 4) and the transmission structure enter the accommodation cavity 12 from the opening. A cover plate 9 is buckled and connected at the opening, and the cover plate 9 restricts the drive member 3 from separating from the movable seat 1. Two opposite sides at an upper end of the lock member 2 are each provided with a rotating shaft 22, the top portions of two opposite side walls of the accommodation cavity 12 are each provided with a shaft hole 13. When assembling, as shown in FIG. 4, the lock member 2 is placed upward into the accommodation cavity 12 from the opening, and the rotating shafts 22 at the two sides of the lock member 2 are respectively clamped into the shaft holes 13 at two sides of the accommodation cavity 12, so that the lock member 2 is rotationally connected to the movable seat 1. One face of the lock member facing away from the rod 30 is provided with a limit post 23, one end of the spring 4 is sleeved on the limit post 23, and the other end of the spring 4 is sleeved in a limit hole correspondingly provided on an inner side surface of the accommodation cavity 12. Specifically, the quantity of the springs 4 is two, but is not limited thereto.

In this embodiment, a pressing rubber block 5 is disposed at one side of the lock member 2 facing the rod 30, so that the pressing rubber block 5 abuts against the rod 30 in the first state. Specifically, the quantity of the mesh assemblies is two, but is not limited thereto. The two mesh assemblies are located at two opposite sides of the pressing rubber block 5.

In this embodiment, the drive member 3 and the movable seat 1 are fitted through a guide and limit structure to guide the movement of the drive member 3 and limit a moving distance of the drive member 3 along the first direction or the second direction with respect to the movable seat 1. As shown in FIG. 2 and FIG. 5, the guide and limit structure includes a guide post 32 disposed at one end of the drive member 3 along the movement direction of the drive member 3 and a guide and limit groove 16 disposed at an inner side surface of the sleeve hole 11 of the movable seat 1 along the movement direction of the drive member 3. One end of the guide and limit groove 16 in a length direction thereof is open and the other end of the guide and limit groove 16 is closed. Specifically, a lower end of the guide and limit groove 16 is open and an upper end of the guide and limit groove 16 is closed. The guide post 32 is slidably sleeved with the guide and limit groove 16. The quantity of the guide posts 32 is two, and the two guide posts 32 are disposed opposite to each other. The quantity of the guide and limit grooves 16 is also two, which are in one-to-one correspondence with the two guide posts 32. A bushing 6 is mounted in the sleeve hole of the movable seat 1, and the bushing 6 is provided with multiple avoidance notches 61 and 62 for avoiding the drive member 3 and the lock member 2. Specifically, the avoidance notch 61 avoids the position where the guide post 32 is located, and the avoidance notch 62 avoids the pressing rubber block 5 on the lock member 2.

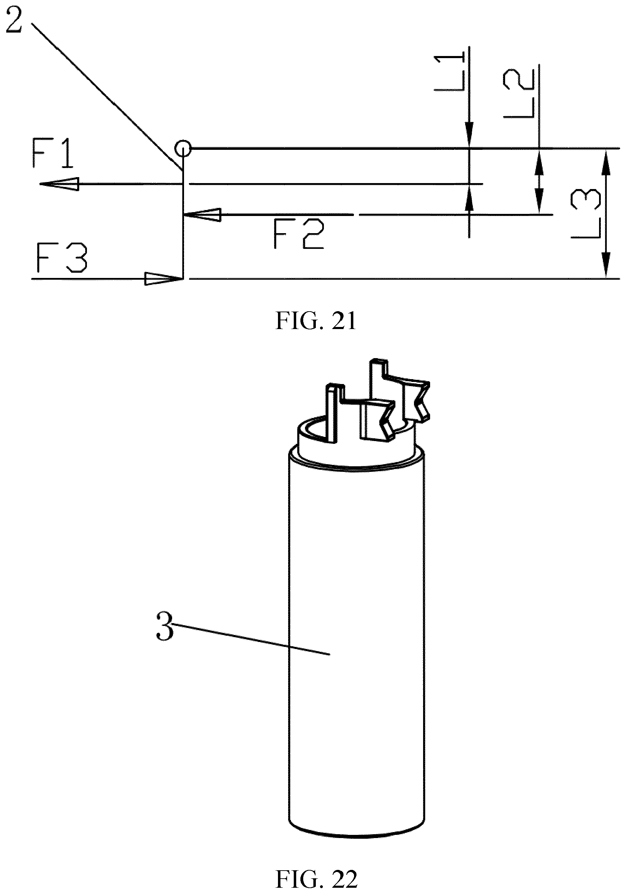

In this embodiment, the drive member 3 has a tubular structure that may be sleeved outside the rod 30, and is provided with an operating handle 33, as shown in FIG. 2. Specifically, the operating handle 33 is disposed at the bottom of the drive member 3. Specifically, the drive member 3 has a double-layer wall body structure, in which an outer wall body plays a role of decoration and wear resistance. The configuration of the drive member 3 is not limited thereto. For example, in other embodiments, the drive member 3 has a tubular structure that may be sleeved outside the rod 30, but no operating handle is provided, and the drive member 3 has a single-layer wall body structure, as shown in FIG. 22. The drive member 3 is provided as a tubular structure, not only can the movement of the drive member 3 be further guided by the rod 30, but also the possibility that the drive member 3 is arbitrarily detached and lost can be avoided.

In this embodiment, a shower pedestal 7 is disposed on the movable seat 1, and the shower pedestal 7 is provided with an insert slot 71 for inserting the shower therein. Therefore, the sliding adjustment device of the present application is a shower slide seat. The shower pedestal 7 may be rotated to adjust a working angle and is connected to the movable seat 1, and the movable seat 1 is fixedly provided with a shift gear 8. The shift gear 8 is meshed with an inner gear ring 72 disposed around a rotation axis of the shower pedestal 7. Specifically, a pillar 14 is disposed at one side of the movable seat 1 facing the shower pedestal 7, as shown in FIG. 6, the shower pedestal 7 is connected to the pillar 14 by fitting a screw 10 with an anti-rotation cap 20, so as to achieve the rotary connection of the shower pedestal 7. At the same time, the shift gear 8 is sleeved outside the pillar 14, and one face of the shift gear 8 facing the movable seat 1 is provided with multiple insertion holes. The multiple insertion holes are one-to-one inserted and fitted with multiple anti-rotation protrusions 15 disposed around the pillar 14 at a side surface of the movable seat 1, so that the shift gear 8 is fixed with respect to the movable seat 1 in a circumferential direction. In other embodiments, the movable seat is provided with a soap box body or a shelf body, etc., so that the present application constitutes a soap box or a shelf.

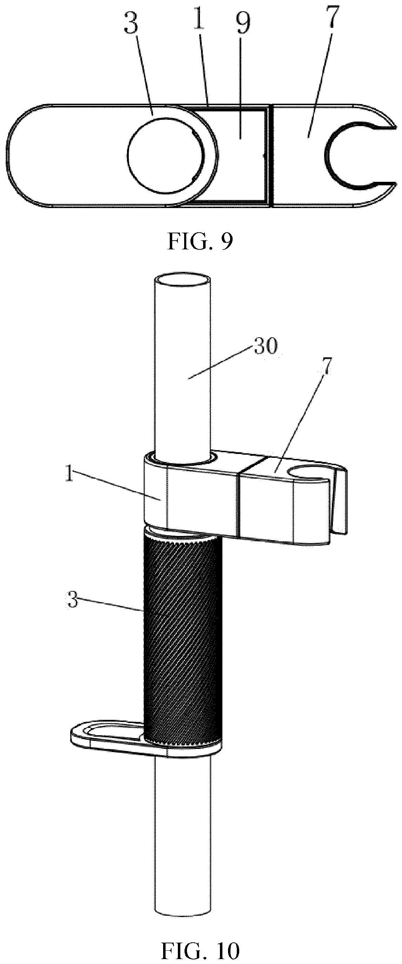

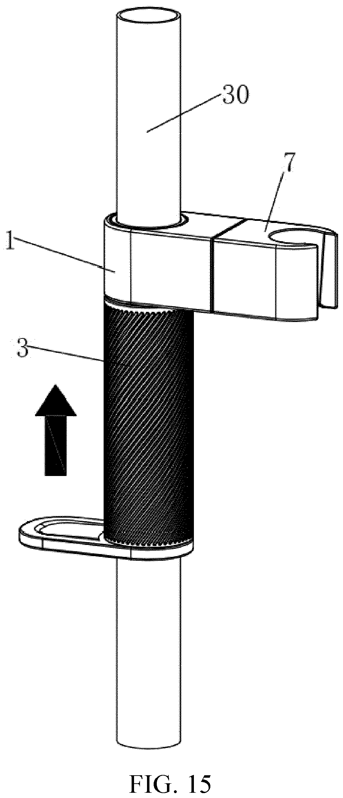

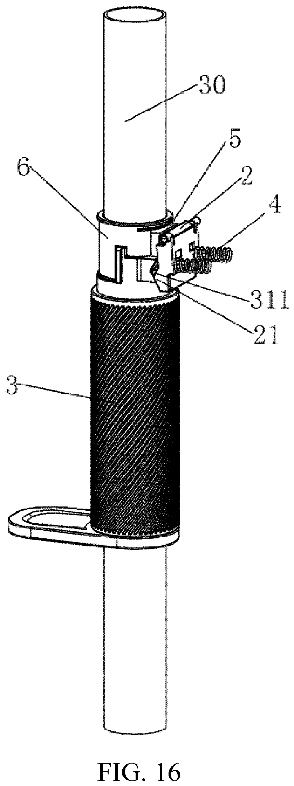

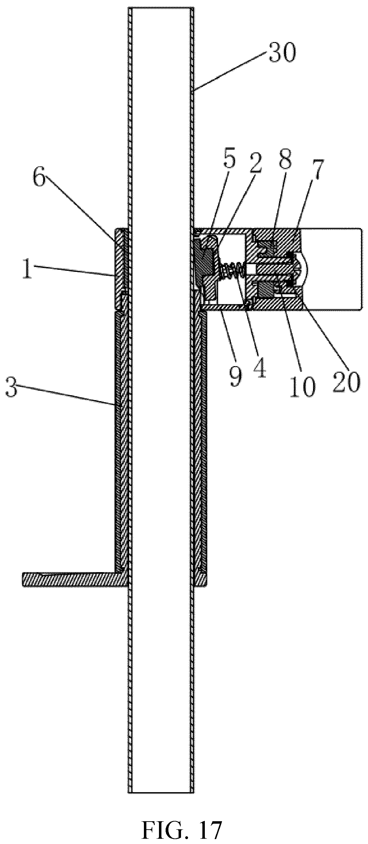

A state of a sliding adjustment device of the present application after it is mounted to the rod 30 is shown in FIG. 10 - FIG. 14. In this case, the reset member (i.e. the spring 4) pre-tensions the lock member 2, and the mesh tooth 21 at the lower end of the lock member 2 meshes with the mesh groove 31 at the upper end of the drive member 3. The pressing rubber block 5 on the lock member 2 abuts against an outer side surface of the rod 30, and the lock member 2 locks the movable seat 1, so that the movable seat 1 is kept at a certain position on the rod 30. When it is required to adjust the height of the movable seat 1 upwards, as shown in FIG. 15 (in which the arrow indicates a push-up direction of the drive member 3, i.e. the first direction), only by pushing the drive member 3 upwards, the lower mesh surface 311 of the mesh groove 31 of the drive member 3 pushes the mesh tooth 21 of the lock member 2 upwards, so that the lock member 2 is driven to rotate towards a side away from the rod 30 by overcoming the elastic force of the spring 4, so that the pressing rubber block 5 on the lock member 2 releases the rod 30, and the lock member 2 unlocks the movable seat 1, as shown in FIG. 16 and FIG. 17. After the movable seat 1 is unlocked, the guide post 32 on the drive member 3 also moves to the upper end of the guide and limit groove 16 of the movable seat 1, so that the drive member 3 cannot continue to move upwards with respect to the movable seat 1. Therefore, the movable seat 1 can be driven to move upwards to a suitable position only by continuously pushing the drive member 3 upwards. When the drive member 3 is released by hand, the lock member 2 is quickly reset to the first state under the action of a restoring force from the spring 4, and at this point the drive member 3 is moved downward by the lock member 2 to return to the state where the mesh groove 31 is meshed with the mesh tooth 21.

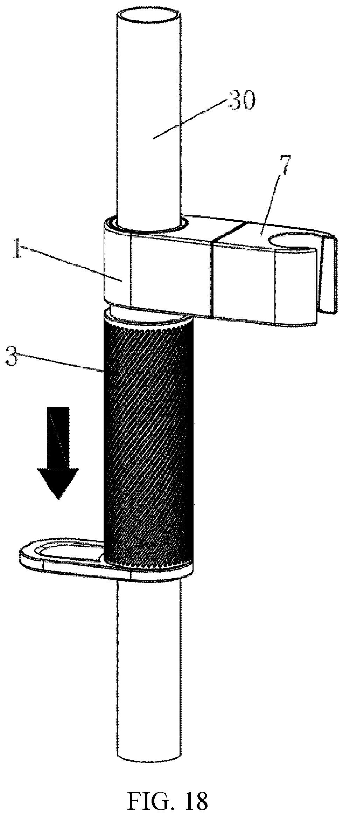

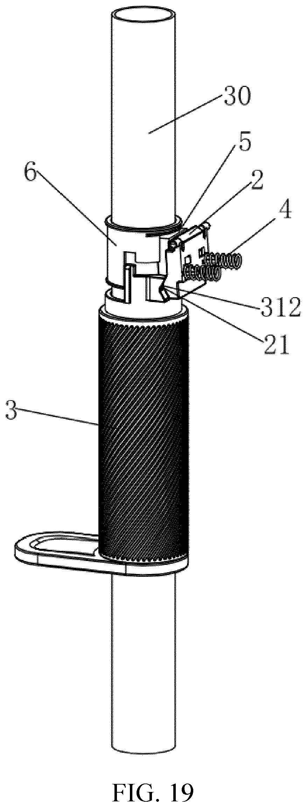

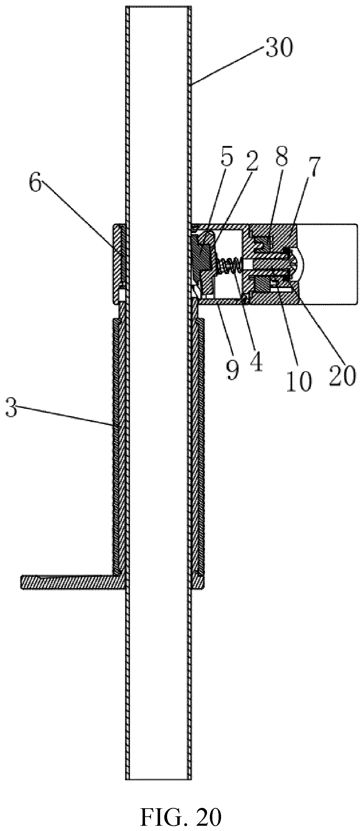

When it is required to adjust the height of the movable seat 1 downward, as shown in FIG. 18 (in which the arrow indicates a pull-down direction of the drive member 3, that is, the second direction), only by pulling down the drive member 3, the upper mesh surface 312 of the mesh groove 31 of the drive member 3 pushes the mesh tooth 21 of the lock member 2 downwards, so that the lock member 2 is driven to rotate towards a side away from the rod 30 by overcoming the elastic force from the spring 4, so that the pressing rubber block on the lock member 2 releases the rod 30, and the lock member 2 unlocks the movable seat 1, as shown in FIG. 19 and FIG. 20. After the movable seat 1 is unlocked, the drive member 3 is subjected to the cover plate 9 and the meshing between the lock member 2 and the drive member 3, so that the drive member 3 cannot continue to move downward with respect to the movable seat 1. Therefore, the movable seat 1 can be driven downwards to a suitable position only by continuously pulling down the drive member 3. When the drive member 3 is released by hand, the lock member 2 is quickly reset to the first state under the action of the restoring force from the spring 4, and at this point the drive member 3 is moved downward by the lock member 2 to return to the state where the mesh groove 31 is meshed with the mesh tooth 21.

Therefore, the sliding adjustment device of the present application enables the operation unlocking direction of the drive member 3 to be consistent with the adjustment direction of the movable seat 1 in the axial direction of the rod 30. When performing adjustment, the movable seat 1 can be adjusted to a suitable position only by a one-step operation, thereby improving the user experience and making the present application especially convenient for some special groups, such as the elderly, children, the disabled and the like. In particular, the transmission structure includes a mesh assembly, which includes the mesh groove 31 and the mesh tooth 21, so that the drive member 3 can achieve a function of bidirectional movable unlocking with a simple structure, and such structure facilitates processing, production and assembly, and the structure is compact, so that the shower slide seat can be kept at a miniaturized volume.

A simplified diagram of force analysis of the lock member 2, the spring 4, and the drive member 3 of the sliding adjustment device of the present application is shown in FIG. 21, in which F1 is an abutment force exerted on the rod 30, F2 is an elastic force exerted on the lock member 2 by the spring 4, and F3 is a driving force exerted on the lock member 2 by the drive member 3; L1 is an arm of force corresponding to F1, which is a perpendicular distance from a rotation fulcrum of the lock member 2 to an action line of F1, and L2 is an arm of force corresponding to F2, which is a perpendicular distance from the rotation fulcrum of the lock member 2 to an action line of F2, L3 is an arm of force corresponding to F3, which is a perpendicular distance from the rotation fulcrum of the lock member 2 to an action line of F3. As described above, the arm of force corresponding to the elastic force exerted by the reset member on the lock member 2 is larger than the arm of force corresponding to the abutment force exerted by the lock member 2 on the rod 30 and smaller than the arm of force corresponding to the driving force exerted by the drive member 3 on the lock member 2, so that L1 < L2 < L3. In this structure of the present application, there are two moment balance situations, the first balance is between the drive and resistance composed of F1 and F2, and F1 × L1 = F2 × L2. L1 < L2 leads to F1 > F2, which produces an effect that only a small elastic force is required to generate a large abutment force, so that the movable seat 1 can be kept in an adjusted state. The second balance is between the drive and resistance composed of F3 and F2, and F3 × L3 = F2 × L2. L2 < L3 leads to F2 > F3, which produces an effect that only a small driving force (i.e., the pushing and pulling forces acting on the drive member 3 by human) can overcome the elastic force of the spring 4 and let the lock member 2 unlock the movable seat 1. Therefore, the present application makes the operation force required by the drive member 3 small, and the operation of the user is labor-saving, while it can also ensure that the lock member 2 has a large abutment force for locking the movable seat 1, and the movable seat 1 may be stably maintained at the adjusted position.

The present application further provides a method for adjusting a sliding adjustment device, wherein a movable seat of the sliding adjustment device is sleeved on a rod, and a lock member is used to abut against the rod to lock the movable seat; during adjustment, a drive member is moved along an axial first direction of the rod or an axial second direction of the rod opposite to the first direction, so that the drive member is linked with the lock member to move and to release the rod, and the drive member is continuously moved along the first direction or the second direction, so that the movable seat is moved to a designated position of the rod; when the adjustment is completed, the lock member and/or the drive member are reset by the reset member, and the lock member returns to a state of locking the movable seat.

Specifically, the method for adjusting the sliding adjustment device of the present application may be implemented by adopting the sliding adjustment device of the present application described above, therefore, a detailed working flow thereof has been described above and will not be repeated here.

According to the sliding adjustment device and the adjustment method therefor according to the present application, the operation unlocking direction of the drive member is consistent with the adjustment direction of a movable seat in the axial direction of the rod, thus achieving a simple mode of one-step adjustment in place by a user. Moreover, the sliding adjustment device of the present application has compact and simple overall structure with labor-saving operation, which greatly improves the user experience, and makes the present application especially convenient for some special groups, such as the elderly, children, the disabled and the like.

Terms "up", "down", "inside", "outside" and the like for denoting an orientation or positional relationship are based on those shown in the drawings and are intended only for ease of description and simplification of the description, and are not intended to indicate or imply that the referenced component must have a particular orientation, or be constructed and operate in a particular orientation, and therefore cannot be construed as limiting on the present application.

The above embodiments are only used to further explain a sliding adjustment device of the present application and an adjustment method therefor, but the present application is not limited to the embodiments. Any simple change, equivalent variation and modification made to the above embodiments according to the technical essence of the present application fall within the protection scope of the technical schemes of the present application.

## Claims

1. A sliding adjustment device, comprising a movable seat (1) and an adjustment mechanism, wherein the movable seat (1) is provided with a sleeve hole (11) for a rod (30) to pass therethrough; the adjustment mechanism comprises a lock member (2) and a drive member (3), wherein the lock member (2) is movably disposed at the movable seat (1) and has a first state and a second state, the lock member (2) enters the sleeve hole (11) and abuts against the rod (30) to lock the movable seat (1) in the first state, and the lock member (2) releases the rod (30) to unlock the movable seat (1) in the second state; the drive member (3) is movably disposed at the movable seat (1), and is fitted with the lock member (2) through a transmission structure, and the drive member (3) drives the lock member (2) to move to the second state by moving along an axial first direction of the rod (30) or an axial second direction of the rod (30) opposite to the first direction; the lock member (2) and/or the drive member (3) are fitted with the movable seat (1) through a reset member to make the lock member (2) return to the first state.

2. The sliding adjustment device according to claim 1, wherein the transmission structure comprises a first transmission surface and a second transmission surface which are on the drive member (3) and distributed along a movement direction of the drive member (3), when the drive member (3) moves along the first direction, the drive member (3) pushes the lock member (2) by the first transmission surface of the drive member (3), and when the drive member (3) moves along the second direction, the drive member (3) pushes the lock member (2) by the second transmission surface of the drive member (3).

3. The sliding adjustment device according to claim 2, wherein the drive member (3) is fitted with the lock member (2) through at least one mesh assembly, the mesh assembly comprises at least one mesh groove (31) and at least one mesh tooth (21), two mesh surfaces (311, 312) of the mesh groove (31) are in a splayed shape, with the mesh groove (31) being wider at an outer side and narrower at an inner side, and the mesh tooth (21) is fitted and meshed with the mesh groove (31); the mesh groove (31) is disposed in the drive member (3), the mesh tooth (21) is disposed in the lock member (2), and the two mesh surfaces of the mesh groove (31) respectively constitute the first transmission surface and the second transmission surface, or the mesh tooth (21) is disposed in the drive member (3), the mesh groove (31) is disposed in the lock member (2), and two mesh surfaces of the mesh tooth (21) respectively constitute the first transmission surface and the second transmission surface.

4. The sliding adjustment device according to claim 1, wherein the lock member (2) is rotationally connected to the movable seat (1), and a rotation axis of the lock member (2) is perpendicular to a movement direction of the drive member (3).

5. The sliding adjustment device according to claim 4, wherein the reset member is an elastic member, and two ends of the reset member are respectively abutted against the lock member (2) and the movable seat (1); an arm of force corresponding to an elastic force exerted by the reset member on the lock member (2) is larger than an arm of force corresponding to an abutment force exerted by the lock member (2) on the rod (30) and smaller than an arm of force corresponding to a driving force exerted by the drive member (3) on the lock member (2).

6. The sliding adjustment device according to any one of claims 1 to 5, wherein the movable seat (1) is provided with an accommodation cavity (12) leading to the sleeve hole (11); the lock member (2), the reset member and the transmission structure are respectively located in the accommodation cavity (12); one end of the movable seat (1) in a movement direction of the movable seat (1) is provided with an opening leading to the accommodation cavity (12); the lock member (2), the reset member and the transmission structure enter the accommodation cavity (12) from the opening, and a cover plate (9) is connected at the opening, and the cover plate restricts the drive member (3) from separating from the movable seat (1).

7. The sliding adjustment device according to any one of claims 1 to 5, wherein a pressing rubber block (5) is disposed on a face of the lock member (2) facing the rod (30), so that the pressing rubber block (5) abuts against the rod (30) in the first state; the reset member is an elastic member, and two ends of the reset member are respectively abutted against the locking member and the movable seat (1).

8. The sliding adjustment device according to any one of claims 1 to 5, wherein the drive member (3) is fitted with the movable seat (1) through a guide and limit structure; the guide and limit structure comprises a guide post (32) disposed at one end of the drive member (3) along the movement direction of the drive member (3) and a guide and limit groove (16) disposed at an inner side surface of the sleeve hole (11) of the movable seat (1) along the movement direction of the drive member (3), one end of the guide and limit groove (16) in a length direction is open and the other end of the guide and limit groove (16) is closed, and the guide post (32) is slidably connected with the guide and limit groove (16); a bushing (6) is mounted in the sleeve hole (11) of the movable seat (1), and the bushing (16) is provided with a plurality of avoidance notches (61, 62) for avoiding the drive member (3) and the lock member (2).

9. The sliding adjustment device according to any one of claims 1 to 5, wherein the drive member (3) has a tubular structure which is capable of being sleeved outside the rod (30), and/or the drive member (3) is provided with an operating handle (33).

10. The sliding adjustment device according to claim 1, wherein a shower pedestal (7) is disposed on the movable seat (1), and the shower pedestal (7) is provided with an insert slot (71) for inserting a shower therein; the shower pedestal (7) is rotationally connected to the movable seat (1) to adjust a working angle, and the movable seat (1) is fixedly provided with a shift gear (8), and the shift gear is meshed with an inner gear ring (72) disposed around a rotation axis of the shower pedestal (7).

11. A method for adjusting a sliding adjustment device, wherein a movable seat (1) of a sliding adjustment device is sleeved on a rod (30), and a lock member (2) is used to abut against the rod (30) to lock the movable seat (1); during adjustment, a drive member (3) is moved along an axial first direction of the rod (30) or an axial second direction of the rod (30) opposite to the first direction, so that the drive member (3) is linked with the lock member (2) to move and to release the rod (30), and the drive member (3) is continuously moved along the first direction or the second direction, so that the movable seat (1) is moved to a designated position of the rod (30); when the adjustment is completed, the lock member (2) and/or the drive member (3) are reset by a reset member, and the lock member (2) returns to a state of locking the movable seat (1).
